# EUROPÄISCHE PATENTSCHRIFT

(11) **EP 3 046 662 B1**
(45) Veröffentlichungstag und Bekanntmachung des Hinweises auf die Patenterteilung: **15.11.2017**
(21) Anmeldenummer: 13763082.8
(22) Anmeldetag: 18.09.2013
(51) Int. Cl.: B01J 2/22, B30B 11/28, B23P 15/24, B30B 15/30

(54) **PRESSENKÖRPER FÜR EINE PELLETIERMASCHINE**
PRESS BODY FOR A PELLETIZING MACHINE
CORPS DE PRESSE POUR UNE MACHINE DE PELLETISATION

(43) Veröffentlichungstag der Anmeldung: 27.07.2016
(73) Patentinhaber: A. H. Meyer Maschinenfabrik GmbH, 27239 Twistringen (DE); Big Dutchman International GmbH, 49377 Vechta (DE)
(72) Erfinder: ROESS, Thomas, 27239 Twistingen (DE); SCHWARZ, Armin, 49377 Vechta (DE)
(74) Vertreter: Eisenführ Speiser
(86) Internationale Anmeldenummer: PCT/EP2013/069398
(87) Internationale Veröffentlichungsnummer: WO 2015/039684

(56) Entgegenhaltungen:
- DE-C1- 19 701 673
- DE-C1- 19 900 352
- JP-A- S59 160 526
- JP-A- 2005 270 917
- JP-U- H0 685 030

## Beschreibung

Die Erfindung betrifft einen Pressenkörper für eine Vorrichtung zum Pelletieren schüttfähiger Materialien, mit zumindest einem einen Innenhohlraum aufweisenden Rotationsteil, welches an seiner äußeren Umfangsfläche eine Zahnung aufweist, deren Zahnlücken zur Aufnahme von Zähnen eines benachbarten Pressenkörpers eingerichtet sind, wobei in den Zahnlücken Durchbrüche ausgebildet sind, die vom Zahnlückengrund bis zum Innenhohlraum reichen. Weiterhin betrifft die Erfindung auch ein Verfahren zum Herstellen eines Pressenkörpers für eine Vorrichtung zum Pelletieren schüttfähiger Materialien, vorzugsweise zum Herstellen einer Topf-Matrize. DE 197 01 673 C1 zeigt einen Pressenkörper gemäß dem Oberbegriff von Anspruch 1 und ein Verfahren zur Herstellung eines solchen Pressenkörpers. Bekannte Pressenkörper werden in Pelletieranlagen eingesetzt, um aus schütt- bzw. rieselfähigem Material einfach handhabbares Material zu erzeugen. Unter schütt- bzw. rieselfähigem Material sind hier insbesondere Stoffe unregelmäßig ausgebildeter Form und Größe zu verstehen, welche ein loses Stoffgemenge bilden und sich mittels eines Pressvorganges zu Körpern, sogenannten Pellets, mit annähernd Kugel- oder Zylinderform ausbilden lassen. Durch das Verpressen zu Körpern vorbestimmter Größe und Dichte wird bei der weiteren Handhabung bzw. Verarbeitung insbesondere die Entstehung von Staub vermieden. Desweiteren ist eine vereinfachte Dosierbarkeit der zu relativ festen Körpern verpressten Materialien gegeben. Material oder Materialien, die beispielsweise zu Pellets verpresst werden, sind unter anderem tierische Exkremente, Sägemehl oder andere zerkleinerte Holzabfälle sowie tierische Futtermittel.

Die bekannten Pressenkörper sind Teil von Pelletieranlagen, denen die schütt- bzw. rieselfähigen Materialien in Form eines losen Materialstromes zugeführt werden. Typische Pelletieranlagen weisen zwei entgegengesetzt zueinander rotierende Pressenkörper auf, die am äußeren Umfang jeweils eine Zahnung aufweisen, die miteinander kämmen. Aus der DE 199 00 352 C1 sind ein Verfahren zum Herstellen eines Pressenkörpers und ein gattungsgemäßer Pressenkörper bekannt. Der Pressenkörper weist ein topfförmiges Rotationsteil mit einem Innenhohlraum auf. An der äußeren Umfangsfläche weist das Rotationsteil eine Zahnung mit einer vorbestimmten Anzahl von Zähnen und Zahnlücken auf, die in die Zahnung eines benachbart angeordneten Pressenkörpers eingreift. In den Zahnlücken sind Durchbrüche vorgesehen, die vom Zahnlückengrund bis zum Innenhohlraum des Pressenkörpers reichen. Noch loses Material, das zwischen die miteinander kämmenden Außenzahnungen der Pressenkörper eingeleitet wird, wird fortlaufend durch die Zähne des einen Pressenkörpers in die mit jenen Zähnen jeweils korrespondierenden Zahnlücken des anderen Pressenkörpers und weiter in die im Zahnlückengrund ausgebildeten Durchbrüche gedrückt. Das durch die Durchbrüche gedrückte Material erfährt dabei eine ausreichend hohe Verdichtung, derart, dass die Bindekräfte der erzeugten Körper nach dem Durchdrücken in den Innenhohlraum des Pressenkörpers genügen, damit die Körper ihre Form beibehalten.

Die bekannten Pressenkörper werden üblicherweise aus einem einteiligen Rotationsteil ausgebildet, das einen sich radial erstreckenden Anschlussbereich für eine Kopplung mit einer den Pressenkörper antreibenden Welle und einem sich vornehmlich axial erstreckenden Pressbereich aufweist. Durch das einteilig ausgebildete Rotationsteil ist eine feste Struktur des Rotationsteils gewährleistet, das aufgrund des zwischen die Zahnungen zu verpressenden Materials stets relativ hohe Druckkräfte aufnehmen muss. Gemäß dem bekannten Verfahren aus der DE 199 00 352 C1 werden zur Ausbildung der Außenzahnung in einem Bereich der zu erzeugenden Zahnlücken Bohrungen nebeneinander eingebracht, deren Außendurchmesser der Zahnlückenweite und deren Tiefe der herzustellenden Zahnlückentiefe entspricht. Anschließend werden koaxial zu den zuvor eingebrachten Bohrungen weiterführende Bohrungen mit kleinerem Durchmesser erzeugt, mittels denen eine Verbindung von der Außenseite des Pressenkörpers bis in den Innenhohlraum des Pressenkörpers geschaffen wird. Anschließend werden die zwischen den Bohrungen im Bereich des Zahnlückengrundes vorhandenen Stege mit einem Fräswerkzeug entfernt und die jeweils zwischen den erzeugten Zahnlücken vorhandenen Zähne an den Stirnseiten abgerundet.

Der Erfindung liegt daher die Aufgabe zugrunde, ein Verfahren der eingangs genannten Art und einen damit erzeugbaren Pressenkörper dahingehend zu verbessern, dass dessen Herstellung auf vereinfachte Weise möglich ist.

Die Aufgabe wird durch einen Pressenkörper für eine Vorrichtung zum Pelletieren schüttfähigen Materials gemäß Anspruch 1 gelöst, mit zumindest einem einen Innenhohlraum aufweisenden Rotationsteil gelöst, welches an seiner äußeren Umfangsfläche eine Zahnung aufweist, dessen Zahnlücken zur Aufnahme von Zähnen eines benachbarten Pressenkörpers eingerichtet sind, wobei in den Zahnlücken Durchbrüche ausgebildet sind, die vom Zahnlückengrund bis zum Innenhohlraum reichen, wobei der Pressenkörper vorzugsweise nach dem oben beschriebenen erfindungsgemäßen Verfahren hergestellt wird, und somit einteilig ausgebildet ist, wobei die Durchbrüche in den Zahnlücken radial ausgerichtet sind, wodurch beim Pressvorgang bzw. Verpressen des insbesondere in die Zahnlücken eingeführten Materials eine vorteilhafte Druckwirkung in Richtung des Innenhohlraumes des Pressenkörpers erfolgt. Zudem ist mit der radialen Ausrichtung der Durchbrüche der kürzeste Weg von der äußeren Umfangsfläche des Matrizenkörpers in Richtung des Innenhohlraumes durch den Matrizenkörpers gewählt. Der Durchmesser der Durchbrüche in den Zahnlücken zur Breite der Zahnlücken hat ein Verhältnis im Bereich von 0,5 bis 0,9. Damit ist ein vorteilhaft ausgewogener Kompromiss zwischen der Festigkeit des Matrizenkörpers und der Durchmesser der Durchbrüche im Zahnlückengrund bewirkt.

Die Erfindung löst die ihr zugrundeliegende Aufgabe bei einem Verfahren der eingangs bezeichneten Art zum Herstellen eines Pressenkörpers nach Anspruch 1 oder 2 für eine Vorrichtung zum Pelletieren schüttfähigen Materials, vorzugsweise zum Herstellen einer Topf-Matrize, mit den Verfahrensschritten: Bereitstellen eines topfförmigen Matrizenrohlings mit einem Innenhohlraum, und Erzeugen einer Außenzahnung mit bis zum Innenhohlraum reichenden Durchbrüchen am Umfang des Matrizenrohlings bestehend aus den Schritten: Erzeugen von vorzugsweise parallel zu dessen Mittenachse verlaufenden Nuten an der äußeren Umfangsfläche, wobei die Nutenbreite der Zahnlückenbreite der Außenzahnung entspricht, und Einbringen von sich vom Nutgrund bis zum Innenhohlraum erstreckenden Durchbrüchen.

Der Erfindung liegt die Erkenntnis zugrunde, dass mit den zwei, einer spanenden Bearbeitung zugrundeliegenden, Verfahrensschritten und dem sich somit ergebenden zweistufigen bzw. zweischrittigen Verfahren zum Herstellen der Außenzahnung mit bis zum Innenhohlraum reichenden Durchbrüchen am Matrizenrohling eine vorteilhafte Vereinfachung bei der Herstellung des Pressenkörpers erreicht wird. Damit wird ein unnötiger Werkzeugwechsel bei der Bearbeitung des Matrizenrohlings vermieden und zudem die Bearbeitungszeit des Matrizenrohlings verkürzt. Die zum Herstellen der Außenzahnung am Matrizenrohling verwendeten zwei Bearbeitungsschritte können in beliebiger Reihenfolge vorgenommen werden. Als Ausgangsprodukt für die Herstellung des Pressenkörpers mittels des erfindungsgemäßen Verfahrens wird bevorzugt ein vorgefertigter, topfförmiger Matrizenrohling verwendet.

Das Erzeugen der Außenzahnung mit bis zum Innenhohlraum reichenden Durchbrüchen am Umfang des Matrizenrohlings weist die Reihenfolge auf: a) Erzeugen der vorzugsweise parallel zu dessen Mittenachse verlaufenden Nuten an der äußeren Umfangsfläche, wobei die Nutenbreite der Zahnlückenbreite der Außenzahnung entspricht, und anschließend b) Einbringen von sich vom Nutgrund bis zum Innenhohlraum erstreckenden Durchbrüchen. Durch die im ersten Schritt zum Herstellen der Außenzahnung erzeugten Nuten, welche in vorbestimmten Abständen zueinander entlang der Umfangsfläche des Pressenkörpers ausgebildet werden, kann auf das relativ zeitaufwendige Erzeugen der Durchbrüche im Bereich der auszubildenden Zahnlücken verzichtet werden. Vorzugsweise werden die Zahnlücken direkt in das volle Material des Matrizenrohlings eingebracht. Anschließend werden in die (vorzugsweise endbearbeiteten) Zahnlücken die von der Außenseite des topfförmigen Matrizenrohlings bis in den Innenhohlraum des Matrizenrohlings reichenden Durchbrüche eingebracht, über die das schüttfähige Material zu relativ festen Körpern verpresst wird.

Vorzugsweise werden die Nuten in eine an der Umfangsfläche des Matrizenrohlings radial nach außen vorstehende Erhebung eingebracht, wodurch gleichzeitig mit dem Erzeugen der Nuten in der am gesamten Umfang ausgebildeten Erhebung die nach außen vorstehenden Zähne der Außenzahnung eines jeweiligen Pressenkörpers erzeugt werden. Damit wird das Herstellen der vorzugsweise an der Umfangsfläche herausstehenden Zähne vereinfacht. Zum Erzeugen der Außenzahnung am Matrizenrohling werden gemäß einem Ausführungsbeispiel der Erfindung sich parallel zur Mittenachse des Matrizenrohlings und vollständig durch die Erhebung hindurch erstreckende Nuten ausgebildet. Mit dem Einbringen der Außenzahnung werden am Umfang des zu erzeugenden Pressenkörpers die Zähne und Zahnlücken ausgebildet.

Bevorzugt werden an der Umfangsfläche des Matrizenrohlings jeweils zu beiden Seiten abgesetzte Nuten, vorzugsweise Langloch-Nuten erzeugt, die eine an der Umfangsfläche radial nach innen abgesetzte Nuttiefe aufweisen. Vorzugsweise sind die Nuten in Länge, Breite und Tiefe so ausgebildet, dass nach außen vorstehenden Zähne korrespondierend in die Nuten eines jeweils benachbarten Pressenkörpers eingreifen können, womit eine Presswirkung auf das schüttfähige Material erzielt wird.

Um eine großflächige Überdeckung der Zähne und der damit korrespondierenden Zahnlücken beim Verpressen des schüttfähigen Materials zu erreichen, ist nach einer Weiterbildung der Erfindung vorgesehen, dass die Stirnseiten der parallel zu den Nuten verlaufenden Zähne der Außenzahnung abgerundet werden, vorzugsweise derart, dass sie zum Eingriff in die Nuteneingerichtet sind. Das Abrunden der Stirnseiten erfolgt besonders bevorzugt in einem Arbeitsgang mit dem Erzeugen der Nuten an der äußeren Umfangsfläche des Matrizenrohlings. Alternativ erfolgt das Abrunden der Stirnseiten im Wege einer Nachbearbeitung der zuvor erzeugten Außenzahnung. Bevorzugt sind die Zähne der Außenzahnung eines herzustellenden Pressenkörpers an den Stirnseiten abgerundet, insbesondere durch Halbkreise abgeschlossen, wodurch zwischen den Zähnen eines Pressenkörpers und den als Langloch-Nuten ausgebildeten Zahnlücken des anderen Pressenkörper zueinander eine große Anlagefläche bewirkt ist. Um den Eingriff der ineinander eingreifenden bzw. miteinander kämmenden Zähne in die Nuten zu ermöglichen, weist eine jeweilige Nut vorzugsweise ein geringes Aufmaß gegenüber einem damit korrespondierenden Zahn auf.

Bevorzugt werden in jeden Nutgrund mehrere Durchbrüche mit sich radial zur Mittenachse des Pressenkörpers erstreckenden Längsachsen eingebracht, vorzugsweise gebohrt. Die erzeugten Durchbrüche erstrecken sich vorzugsweise radial zur Mittenachse des Matrizenrohlings, wodurch eine gerichtete Presswirkung im rechten Winkel zu einem jeweiligen Umfangsabschnitt des Pressenkörpers erreicht wird. Damit wird das schüttfähige Material mit ausreichend hoher Kraft durch die Durchbrüche des Pressenkörpers gedrückt. Darüber hinaus lassen sich radial zur Mittenachse des Pressenkörpers verlaufende Durchbrüche auf einfache Weise in die Oberfläche des zylindrischen Wandungsabschnittes des topfförmigen Matrizenrohlings.

In einer alternativen Ausführungsform des erfindungsgemäßen Verfahrens werden die Durchbrüche benachbarter Zahnlücken in einem Winkel zwischen 5° und 10° zueinander eingebracht.

Vorzugsweise wird in jeden Nutgrund eine Vielzahl von Durchbrüchen eingebracht, vorzugsweise gebohrt, deren Durchmesser jeweils kleiner sind als die Zahnlückenbreite der Außenzahnung. Das Einbringen, insbesondere Bohren der Durchbrüche stellt eine vorteilhafte Möglichkeit zur Herstellung der vom Nutgrund bis in den Innenhohlraum des topfförmigen Matrizenrohlings reichenden, jeweils beabstandet zueinander angeordneten Durchbrüche dar. Die unmittelbar in den Nutgrund eingebrachten Bohrungen weisen dabei einen Durchmesser auf, der geringer als die Breite der erzeugten Nut bzw. als der Abstand zwischen zwei, optional parallel zueinander angeordneten, Zahnflanken und damit der Zahnlückenbreite zwischen zwei benachbarten Zähnen der Außenzahnung ist. Die Bohrungen sind vorzugsweise gleichmäßig über die gesamte Länge am Nutgrund verteilt ausgebildet.

Eine bevorzugte Ausführungsform der Erfindung sieht vor, dass das Bereitstellen des Matrizenrohlings den Schritt des Erzeugens des topfförmigen Matrizenrohlings aus dem Halbzeug das Bearbeiten mittels Drehen umfasst. Bevorzugt wird vor dem Erzeugen der Außenzahnung aus einem im Wesentlichen zylindrischen Halbzeug, beispielsweise in Form eines Rundstahls, der topfförmig ausgebildete Matrizenrohling gedreht. Das Drehen umfasst dabei das Erzeugen der Außenkontur und der Innenkontur des Matrizenrohlings, wobei das Erzeugen der Innenkontur zumindest die Ausbildung des Innenhohlraums (und damit die Ausbildung der Topfform des Matrizenrohlings) umfasst. Bevorzugte Ausführungen der Erfindung sehen das Bereitstellen und die Herstellung des Matrizenrohlings mit seiner Außen- und Innenkontur mittels Gießen oder Tiefziehen vor.

Beim Erzeugen der Außenkontur werden bevorzugt Bereiche der Umfangsfläche des topfförmigen Matrizenrohlings spanend, etwa mittels Abdrehen entfernt. Vorzugsweise wird eine im Abstand zu den Stirnseiten des zu erzeugenden Matrizenrohlings nach außen vorstehende Erhebung ausgebildet. Das Abdrehen von Bereichen der Umfangsfläche stellt eine vorteilhafte Möglichkeit zur Ausbildung der herzustellenden Erhebung dar. Die sich in axialer Richtung über einen Teilabschnitt des Matrizenrohlings erstreckende Erhebung kann dann auf einfache Weise durch Einbringen der Nuten und ggf. das Bearbeiten der Stirnseiten der dadurch zwischen den Nuten ausgebildeten Zähne zu der Außenzahnung an der Außenseite des Pressenkörpers umgearbeitet werden.

In einer anderen Weiterbildung der Erfindung ist vorgesehen, dass der teilbearbeitete Pressenkörper unmittelbar nach dem Erzeugen der Außenzahnung, oder dass der fertig bearbeitete Pressenkörper nach dem Einbringen der Durchbrüche gehärtet wird. Damit wird insbesondere die Festigkeit der Oberfläche des Pressenkörpers erhöht und folglich der Verschleiß am Pressenkörper während seines Einsatzes reduziert. Ein solch gehärteter Pressenkörper weist eine höhere Standzeit auf, wodurch der Zeit- und Kostenaufwand für dessen Wartung bzw. Instandhaltung reduziert sind. Bevorzugt werden die in Eingriff stehenden Flächenbereiche an der äußeren Umfangsfläche des Pressenkörpers über eine vorbestimmte Materialtiefe gehärtet, um die notwendige Zähigkeit des zur Ausbildung des Pressenkörpers verwendeten Werkstoffs, wie z. B. des bevorzugt zur Anwendung kommenden metallischen Werkstoffs, in den nichtgehärteten Bauteilbereichen zu erhalten.

Der Erfindung liegt die Erkenntnis zugrunde, dass ein einteilig ausgebildeter Pressenkörper eine hohe Festigkeit aufweist, wodurch eine hohe Standzeit sichergestellt ist. Durch die einteilige Ausgestaltung des Pressenkörpers sind Verbindungs- bzw. Trennstellen am Pressenkörper vermieden, wodurch der Pressenkörper eine hohe strukturelle Integrität besitzt. Zudem lässt sich ein solch erfindungsgemäßer Pressenkörper kostenökonomisch herstellen.

Vorzugsweise sind die Zahnlücken mittels an der Umfangsfläche nach radial nach innen abgesetzter Langloch-Nuten ausgebildet, wodurch die Zahnlücken entsprechend durch die überstehenden Materialbereiche seitlich begrenzt werden. Die Längenbegrenzung der Zahnlücken ist insbesondere von Vorteil, um ein seitliches Ausweichen des anfangs noch losen und damit unverfestigten schüttfähigen Materials im Bereich des Zahnlückengrundes zu vermeiden. Das Material, welches in die Zahnlücken eingefüllt bzw. eingebracht wird, wird somit durch den in die Zahnlücke eingreifenden Zahn des benachbart angeordneten Pressenkörpers nicht an den Seiten einer Zahnlücke herausgedrückt. Das sich in der Zahnlücke befindliche Material wird somit im Wesentlichen vollständig in die Durchbrüche im Zahnlückengrund gedrückt. Dabei erfolgt eine Verfestigung des Materials, und das sich in den Durchbrüchen befindliche Material wird zudem durch das von außen nachdrückende Material in Richtung des Innenhohlraumes bewegt. Ein seitliches Herausquellen des Materials während des Verfestigungsprozesses wird durch eine ausreichend hohe seitliche Begrenzung der Zahnlücken weitestgehend vermieden. Vorzugsweise bilden die äußeren Umfangsflächen des Pressenkörpers, die über den Zahnlückengrund hinausstehen, Ablaufflächen am Pressenkörper aus, an denen die Ablaufflächen eines korrespondierend ausgebildeten anderen Pressenkörpers während des Bearbeitungsvorganges (vorzugsweise spaltfrei) anliegen. Zwischen den Ablaufflächen werden vorzugsweise jedoch keine Stützkräfte von Pressenkörper zu Pressenkörper übertragen. Die Ablaufflächen dienen zur Begrenzung bzw. Eliminierung des zwischen den gegensinnig drehenden Pressenkörpern vorhandenen Spaltmaßes, derart, dass in den seitlichen Bereich des Pressenkörpers gelangendes Material in Richtung der zwischen die Ablaufflächen angeordneten, fortwährend umlaufenden Zahnungen der miteinander kämmenden Pressenkörper abgeleitet wird.

Der Durchmesser der Durchbrüche und damit die Breite der Zahnlücken sind insbesondere abhängig von den zur Verpressung vorgesehenen Materialien und deren spezifischen Materialeigenschaften. Bei Materialien, die eine relativ hohe Festigkeit aufweisen, wird das Verhältnis des Durchmessers der Durchbrüche, welche insbesondere als kreisrunde Bohrungen ausgebildet sind, zur Breite der Zahnlücke einen bevorzugt großen Wert aufweisen. Bei Materialien, die relativ einfach zu verpressen sind, kann das Verhältnis entsprechend geringer gewählt werden.

Bevorzugt weist der erfindungsgemäße Matrizenkörper drei bis sechs, vorzugsweise vier bis fünf nebeneinander angeordnete Reihen von Durchbrüchen in seinen Zahnlücken auf. Damit lässt sich eine ausreichend große Menge an schütt- bzw. rieselfähigem Material beispielsweise pro Umdrehung der sich gegenläufig bewegenden Pressenkörper in die Durchbrüche des Matrizenkörpers pressen. Die Anzahl der hintereinander in Längsrichtung der Zahnlücken des erfindungsgemäßen Matrizenkörpers eingebrachten Durchbrüche ist ebenfalls abhängig von der Größe des Matrizenkörpers und der Anzahl der Zähne entlang des Umfangs und der damit verbundenen Abmessungen. Hinsichtlich der Größe der Zahnung auf der Umfangsfläche und der sich daraus ergebenden Abmessungen der Durchbrüche im Matrizenkörper ist ein ausgewogenes Verhältnis zwischen der Festigkeit des Matrizenkörpers und dem zu erzeugenden Materialstrom an verfestigten Pellets gewährleistet.

Jeder Zahn weist vorzugsweise zueinander parallel verlaufende Zahnflanken auf. Mit der Ausbildung von Zähnen mit parallel zueinander verlaufenden Zahnflanken ist, im Gegensatz zu einer Zahnung mit einer Evolventenverzahnung, eine einfache Ausbildung der Zähne entlang des Umfangs des Matrizenkörpers erzielt. Über die im Umfangsbereich des jeweiligen Zahnes vorzugsweise senkrecht zur Umfangsfläche ausgerichteten Zahnflanken ist ein vorteilhafter Rückhalt des zu verpressenden Materials in den jeweiligen Zahnlücken gewährleistet. Aufgrund der parallel zueinander ausgerichteten Zahnflanken eines jeweiligen Zahnes weist eine Zahnlücke eine insbesondere keilförmige Ausgestaltung auf.

Vorzugsweise weist jeder Zahn einen Zahnkopf mit einer rechtwinklig zu den parallel zueinander verlaufenden Zahnflanken angeordneten Kopffläche auf. Damit weist jeder Zahn eine möglichst große, auf das zu verpressende Material einwirkende, ebene Druckfläche auf. Ein Ausweichen des zu verpressenden Materials entlang der Zahnflanken, wie es beispielsweise bei einer Evolventenverzahnung auftreten könnte, wird hier vermieden. Damit wird stets ein Großteil des in die Zahnlücke eingebrachten Materials in die Durchbrüche im Zahnlückengrund gedrückt bzw. gefördert. Mit einer derartigen Kopffläche, die vorzugsweise dem Querschnitt eines sich radialen nach außen erstreckenden Zahnes entspricht, ist ein hoher Wirkungsgrad beim Pelletieren von schüttfähigen Materialien mit solch erfindungsgemäßen Pressenkörpern erreicht. Die Zähne eines Pressenkörpers weisen in ihren Kopfbereichen in den korrespondierenden Zahnlücken eines benachbarten Pressenkörpers noch so viel Spiel auf, dass das Ein- und Ausgleiten der Zähne in die Zahnlücken ohne Klemmen möglich ist. Der Zahnkopf kann eine umlaufende Fase im Übergangsbereich von seiner Kopffläche zu den vorzugsweise senkrecht dazu verlaufenden Zahnflanken aufweisen.

In einer anderen Weiterbildung der Erfindung weist der Pressenkörper einen sich in den Innenhohlraum erstreckenden, konisch geformten Abschnitt auf. Über den konisch geformten Abschnitt ist eine torsionssteife Ausbildung des Pressenkörpers gewährleistet. Infolgedessen ist dessen Betriebssicherheit und Standzeit verbessert.

Ein weiterer Aspekt der Erfindung bezieht sich auf eine Vorrichtung zum Pelletieren von schüttfähigem Material, insbesondere von biologischen Materialien, mit zumindest zwei miteinander kämmenden, topfförmigen Pressenkörper gemäß Anspruch 1 oder 2 wobei dem Pressenkörper wenigstens ein Materialeinlass für das zwischen die Pressenkörper einzubringende schüttfähige Material und ein Materialauslass für das zu Körpern verpresste Material zugeordnet ist. Mit dem Einsatz bzw. der Verwendung von erfindungsgemäß hergestellten Pressenkörpern gemäß einer der voran beschriebenen, erfindungsgemäßen Ausführungen ist eine einfache und effiziente Herstellung der Pelletiervorrichtung erreicht. Bevorzugt weist die erfindungsgemäße Pelletiervorrichtung eine Leiteinrichtung auf, mittels welcher das zu verpressende, schüttfähige Material unmittelbar auf den Matrizenbereich der Pressenkörper gelenkt bzw. geleitet wird.

Im Folgenden wird die Erfindung anhand eines möglichen Ausführungsbeispiels unter Bezugnahme auf die beiliegenden Figuren näher erläutert. Hierbei zeigen:
- Figur 1: eine perspektivische Teilansicht eines Pressenbereiches einer Pelletiermaschine;
- Figur 2: eine perspektivische Teilansicht des Auslassbereiches einer Pelletiermaschine;

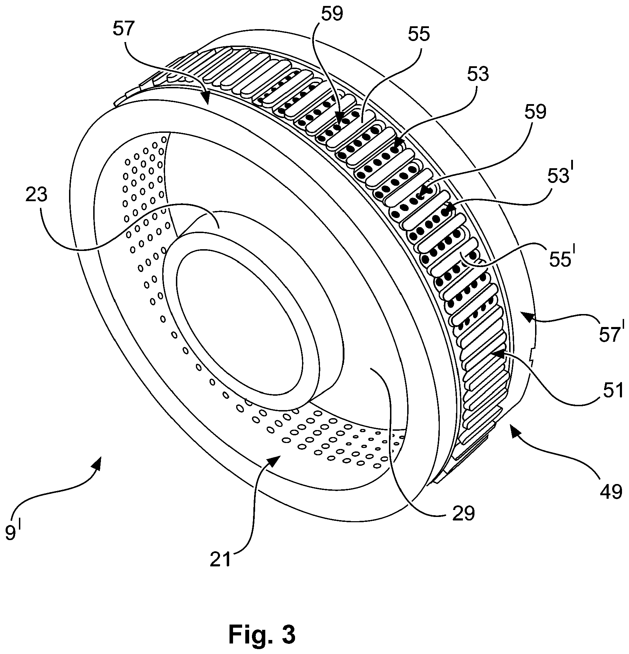

- Figur 3: eine Teilansicht eines montierten, erfindungsgemäßen Pressenkörpers im Schnitt, und
- Figur 4: eine perspektivische Ansicht einer Leiteinrichtung.

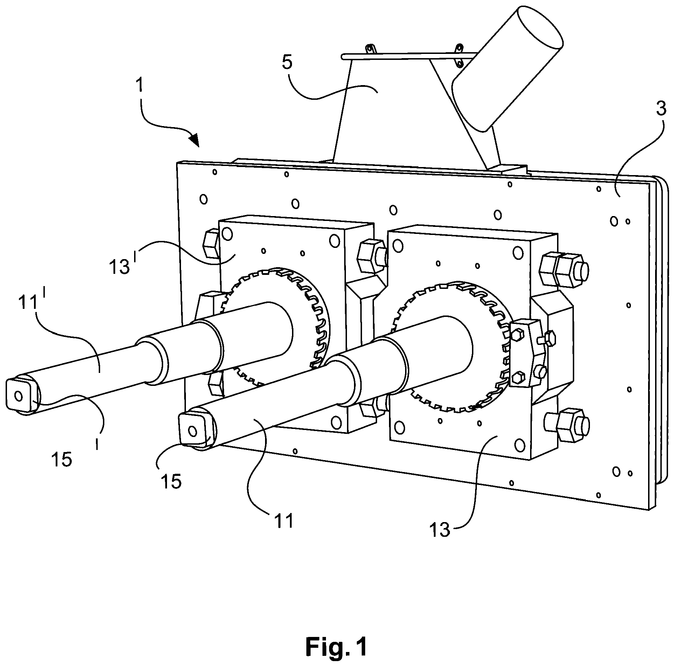

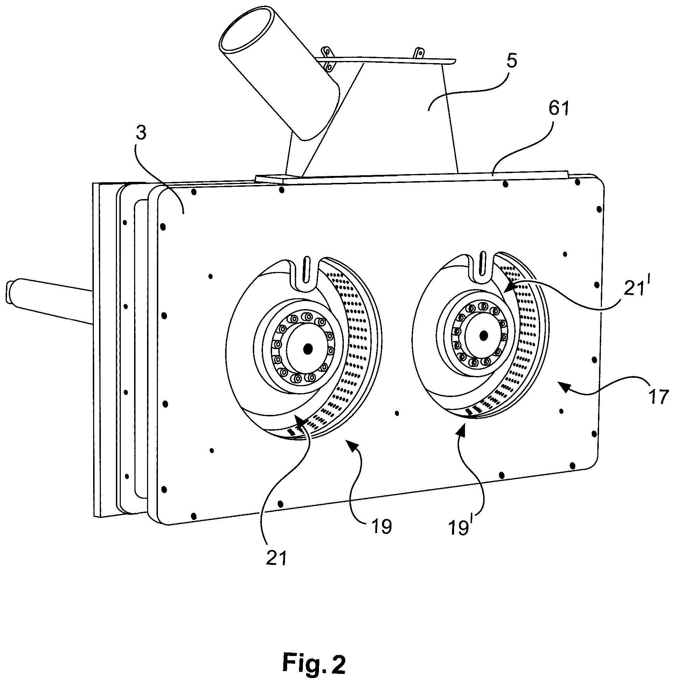

In Figur 1 ist der Pressbereich 1 einer auch als Pelletiermaschine bezeichneten Vorrichtung zum Pelletieren von schütt- bzw. rieselfähigen Materialien gezeigt, der ein Gehäuse 3 und einen Materialeinlass 5 für das zu verpressende Material aufweist. Innerhalb des Gehäuses 3 sind zwei Pressenkörper 9, 9 (Figur 2) angeordnet, welche über die Antriebswellen 11, 11' gegensinnig angetrieben werden. An der Außenseite des Gehäuses 3 sind Lager 13, 13' für die sich im Gehäuse 3 bewegenden Pressenkörper 9 angeordnet, welche Versatzbewegungen der Pressenkörper 9 zueinander innerhalb des Gehäuses vermeiden. Mit den hier gezeigten Wellenenden 15, 15' der in eine Rotationsbewegung zu versetzenden Antriebswellen 11, 11' ist eine nicht näher dargestellte Antriebseinrichtung koppelbar.

Figur 2 zeigt den Materialauslass 17 der Pelletiermaschine, wobei der Materialauslass insbesondere zwei vertikal ausgerichtete Auslassöffnungen 19, 19' aufweist, welche jeweils mit einem Innenhohlraum 21, 21' der insbesondere topfförmig ausgebildeten Pressenkörper 9, 9 axial fluchten. Über die Auslassöffnungen 19, 19' wird das Material, welches dann zu kugelförmigen oder zylinderförmigen Körpern vorbestimmter Dichte verpresst ist, fortwährend oder kontinuierlich zur weiteren Verarbeitung abgeführt. Unter einem fortwährenden bzw. kontinuierlichen Abführen der Körper ist vorliegend ein Abführen mit einem bevorzugt gleichmäßigen Materialstrom zu verstehen. Wie aus Figur 2 ersichtlich, reichen die Antriebswellen 11, 11' bis in das Innere des Gehäuses 3, wobei die Antriebswellen mit den Pressenkörpern 9 drehfest verbunden sind.

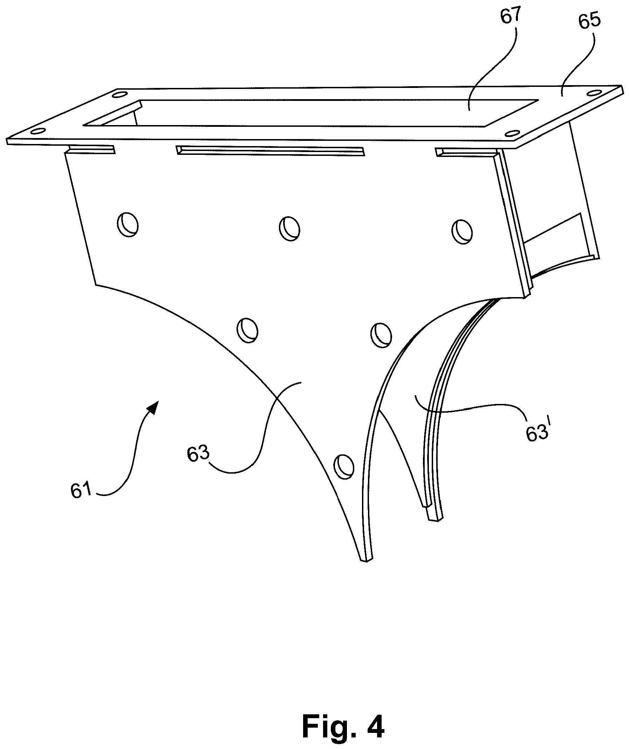

In Figur 4 ist ein Pressenkörper 9 gezeigt. Der Pressenkörper 9 weist vorzugsweise eine Topfform mit einem Innenhohlraum 21 auf und ist einteilig ausgebildet. An seiner zylindrisch ausgebildeten Umfangsfläche 49 weist der Pressenkörper 9 eine Außenzahnung 51 auf. Die Zahnlücken 53, 53' sind als Langloch-Nuten ausgebildet, welche eine an der Umfangsfläche nach innen abgesetzte Nuttiefe aufweisen. Jeder zwischen zwei parallel zueinander angeordneten Zahnlücken 53, 53' verlaufende Zahn 55, 55' ist an seiner Stirnseite halbkreisförmig abgerundet, wodurch die Zähne 55, 55' des Pressenkörpers 9 eine identische Grundfläche wie die Zahnlücken 53, 53' haben. Damit korrespondieren die Zähne 55, 55' des Pressenkörpers 9 auf vorteilhafte Weise mit den Zahnlücken eines (nicht dargestellten) mit dem Pressenkörper 9 in Eingriff bringbaren weiteren Pressenkörpers. Zu beiden Seiten der Außenzahnung 51 sind zwei Ablaufflächen 57, 57' vorgesehen, die bevorzugt mit den Ablaufflächen eines korrespondierenden Pressenkörpers spaltfrei in Anlage stehen, so dass die Ablaufflächen 57, 57' der beiden Pressenkörper jeweils einander berühren. Die Ablaufflächen 57, 57' begrenzen gleichzeitig die Zahnlücken 53, 53' in axialer Richtung. Die radial zur Mittenachse des Pressenkörpers 9 ausgerichteten Durchbrüche 59, 59' weisen einen Durchmesser auf, der kleiner ist als die Breite eines jeweiligen Zahnlückengrundes 53, 53'. Die Durchbrüche 59, 59' verlaufen in einem Winkel zwischen 5° und 10° zu einer sich durch die Mittenachse des Pressenkörpers 9 und den jeweils zugeordneten Durchbrüchen erstreckenden radialen Achse. Der einteilig ausgebildete Pressenkörper 9 weist ebenfalls einen Flanschabschnitt 23 mit einem sich in einen Innenhohlraum 21 erstreckenden, konisch geformten Abschnitt 29 auf

Figur 5 zeigt eine Detailansicht einer an der Vorrichtung zum Pelletieren zum Einsatz kommenden Leiteinrichtung 61, welche einen Satz Leitbleche 63, 63' aufweist. Mit der Leiteinrichtung 61 wird das schüttfähige Material unmittelbar der Außenzahnung der Pressenkörper 9 (Figur 1) zugeführt. Damit ist gewährleistet, dass nur die zum Pressen vorgesehenen Matrizenbereiche der Pressenkörper mit dem zu verpressenden Material beaufschlagt bzw. beladen werden. Die Leiteinrichtung 61 weist einen mit dem Materialeinlass 5 korrespondierenden Anschlussflansch 65 mit einer Einlassöffnung 67 auf.

## Patentansprüche

1. Pressenkörper (9) für eine Vorrichtung zum Pelletieren schüttfähigen Materials, mit zumindest einem einen Innenhohlraum (21) aufweisenden Rotationsteil, welches an seiner äußeren Umfangsfläche eine Zahnung (51) aufweist, dessen Zahnlücken (35, 53, 53') zur Aufnahme von Zähnen (55, 55') eines benachbarten Pressenkörpers (9) eingerichtet sind, und wobei in den Zahnlücken (53, 53') Durchbrüche (59, 59') ausgebildet sind, die vom Zahnlückengrund bis zum Innenhohlraum (21) reichen
**dadurch gekennzeichnet, dass** die Durchbrüche (59, 59') in den Zahnlücken (, 53, 53') in radialer Richtung ausgerichtet sind und die Größe der Durchbrüche (59, 59') in den Zahnlücken (53, 53') zur Breite der Zahnlücken (53, 53') ein Verhältnis im Bereich zwischen 0,5 und 0,9 hat.

2. Pressenkörper nach Anspruch 1,
**dadurch gekennzeichnet, dass** jeder Zahn (55, 55') einen Zahnkopf mit einer rechtwinklig zu den Zahnflanken verlaufenden Kopffläche aufweist, wobei deren Breite etwa der Zahnbreite entspricht.

3. Vorrichtung zum Pelletieren von schüttfähigem Material, insbesondere biologischen Materialien, mit zumindest zwei miteinander kämmenden, topfförmigen Pressenkörpern (9) gemäß Anspruch 1 oder 2, wobei den Pressenkörper (9) wenigstens ein Materialeinlass (5) für das zwischen die Pressenkörper einzubringende schüttfähige Material und ein Materialauslass (17) für das zu Körpern verpresste Material zugeordnet ist, und mit einer das schüttfähige Material unmittelbar auf den Matrizenbereich der Pressenkörper (9) lenkenden Leiteinrichtung (61).

4. Verfahren zum Herstellen eines Pressenkörpers nach Anspruch 1 oder 2 für eine Vorrichtung zum Pelletieren schüttfähigen Materials, vorzugsweise zum Herstellen einer Topf-Matrize, umfassend die Verfahrensschritte:
- Bereitstellen eines topfförmigen Matrizenrohlings mit einem Innenhohlraum,
- Erzeugen einer Außenzahnung (51) mit bis zum Innenhohlraum reichenden Durchbrüchen am Umfang des Matrizenrohlings bestehend aus den Schritten:
Erzeugen von vorzugsweise parallel zur Mittenachse des Matrizenrohlings verlaufende Nuten an der äußeren Umfangsfläche (49), wobei die Nutenbreite der Zahnlückenbreite der Außenzahnung (51) entspricht, und
Einbringen von sich vom Nutgrund bis zum Innenhohlraum erstreckenden Durchbrüche (59, 59').

5. Verfahren nach Anspruch 4, **dadurch gekennzeichnet,**
**dass** die Reihenfolge der Schritte des Erzeugens der Außenzahnung lautet:
a) Erzeugen von vorzugsweise parallel zu dessen Mittenachse verlaufenden Nuten an der äußeren Umfangsfläche (49), wobei die Nutenbreite der Zahnlückenbreite der Außenzahnung (51) entspricht, und
b) anschließendes Einbringen von sich vom Nutgrund bis zum Innenhohlraum erstreckenden Durchbrüchen (59, 59').

6. Verfahren nach Anspruch 4 oder 5,
**dadurch gekennzeichnet, dass** die Nuten in eine an der Umfangsfläche (49) des Matrizenrohlings radial nach außen vorstehende Erhebung eingebracht werden.

7. Verfahren nach einem der vorstehenden Ansprüche 4 bis 6,
**dadurch gekennzeichnet, dass** an der Umfangsfläche (49) des Matrizenrohlings jeweils zu beiden Seiten abgesetzte Nuten, bevorzugt Langloch-Nuten erzeugt, vorzugsweise gefräst werden, die eine an der Umfangsfläche (49) radial nach innen abgesetzte Nuttiefe aufweisen.

8. Verfahren nach einem der Ansprüche 4 bis 7,
**dadurch gekennzeichnet, dass** die Stirnseiten der parallel zu den Nuten verlaufenden Zähne (55, 55') der Außenzahnung (51) abgerundet werden, derart, dass sie zum Eingriff in die Nuten, vorzugsweise Langlochnuten, eines benachbart anordenbaren Pressenkörpers eingerichtet sind.

9. Verfahren nach einem der Ansprüche 4 bis 8,
**dadurch gekennzeichnet, dass** in jeden Nutgrund mehrere Durchbrüche (59, 59') mit sich radial zur Mittenachse des Pressenkörpers (9) erstreckenden Längsachsen eingebracht werden.

10. Verfahren nach einem der Ansprüche 4 bis 9,
**dadurch gekennzeichnet, dass** in jeden Nutgrund eine Vielzahl von Durchbrüchen eingebracht, vorzugsweise gebohrt wird, deren Durchmesser kleiner sind als die Breite der Zahnlücken (53, 53') der Außenzahnung.

11. Verfahren nach einem der Ansprüche 4 bis 10,
**dadurch gekennzeichnet, dass** das Bereitstellen des Matrizenrohlings das Erzeugen des topfförmigen Matrizenrohling mit seinem Innenhohlraum aus einem im Wesentlichen zylindrischen Halbzeug vorzugsweise mittels Drehen umfasst.

12. Verfahren nach Anspruch 11,
**dadurch gekennzeichnet, dass** beim Erzeugen des Matrizenrohlings Bereiche der Umfangsfläche des topfförmigen Matrizenrohlings durch Abdrehen entfernt werden und eine im Abstand zu den Stirnseiten des zu erzeugenden Matrizenrohlings nach außen vorstehende Erhebung ausgebildet wird.

## Claims

1. Press body (9) for an apparatus for pelletizing pourable material, with at least one rotary part having an inner cavity (21) which has at its outer circumferential surface a toothing (51), the tooth gaps (35, 53, 53') of which are adapted to receive teeth (55, 55') of an adjacent press body (9), and openings (59, 59') being formed in the tooth gaps (53, 53'), which openings reach from the tooth gap bottom as far as the inner cavity (21),
**characterized in that** the openings (59, 59') in the tooth gaps (53, 53') are aligned in the radial direction and the size of the openings (59, 59') in the tooth gaps (53, 53') relative to the width of the tooth gaps (53, 53') has a ratio in the range between 0.5 and 0.9.

2. Press body according to claim 1,
**characterized in that** each tooth (55, 55') has a tooth head with a head surface extending at right angles to the tooth flanks, the width of which head surface corresponds approximately to the tooth width.

3. Apparatus for pelletizing pourable material, in particular biological materials, with at least two intermeshing, pot-shaped press bodies (9) according to claim 1 or 2, there being associated with the press bodies (9) at least one material inlet (5) for the pourable material to be introduced between the press bodies and one material outlet (17) for the material pressed to form bodies, and with a guide device (61) directing the pourable material directly onto the die region of the press bodies (9).

4. Method for producing a press body according to claim 1 or 2 for an apparatus for pelletizing pourable material, preferably for producing a pot die, comprising the method steps of:
- providing a pot-shaped die blank with an inner cavity,
- creating an outer toothing (51) with openings at the circumference of the die blank which reach as far as the inner cavity, consisting of the steps of:
- creating grooves at the outer circumferential surface (49) which preferably extend parallel to the centre axis of the die blank, the groove width corresponding to the tooth gap width of the outer toothing (51), and
- introducing openings (59, 59') extending from the groove bottom as far as the inner cavity.

5. Method according to claim 4,
**characterized in that** the sequence of steps for creating the outer toothing is:
a) creating grooves at the outer circumferential surface (49) which preferably extend parallel to its centre axis, the groove width corresponding to the tooth gap width of the outer toothing (51), and
b) subsequently introducing openings (59, 59') extending from the groove bottom as far as the inner cavity.

6. Method according to claim 4 or 5,
**characterized in that** the grooves are introduced into an elevation protruding radially outwards at the circumferential surface (49) of the die blank.

7. Method according to one of the preceding claims 4 to 6, **characterized in that** grooves recessed respectively on both sides at the circumferential surface (49) of the die blank are created, preferably milled, preferably elongated-hole grooves, which have a groove depth radially inwardly recessed at the circumferential surface (49).

8. Method according to one of claims 4 to 7,
**characterized in that** the end faces of the teeth (55, 55') of the outer toothing (51) which extend parallel to the grooves are rounded such that they are adapted to engage in the grooves, preferably elongated-hole grooves, of an adjacently arrangeable press body.

9. Method according to one of claims 4 to 8,
**characterized in that** a plurality of openings (59, 59') with longitudinal axes extending radially with respect to the centre axis of the press body (9) are introduced into each groove bottom.

10. Method according to one of claims 4 to 9,
**characterized in that** a large number of openings are introduced, preferably bored, into each groove bottom, the diameters of which openings are smaller than the width of the tooth gaps (53, 53') of the outer tooting.

11. Method according to one of claims 4 to 10,
**characterized in that** the providing of the die blank comprises producing the pot-shaped die blank with its inner cavity from a substantially cylindrical semi-finished product preferably by means of turning.

12. Method according to claim 11,
**characterized in that**, when creating the die blank, regions of the circumferential surface of the pot-shaped die blank are removed by turning off and an outwardly protruding elevation is formed at a distance from the end faces of the die blank to be created.

## Revendications

1. Corps de presse (9) pour un dispositif de pelletisation d'un matériau en vrac, comprenant au moins une partie rotative présentant une cavité intérieure (21), laquelle partie rotative présente, au niveau de sa surface périphérique extérieure, une denture (51), dont les interstices entre les dents (35, 53, 53') sont mis en place pour recevoir des dents (55, 55') d'un corps de presse (9) adjacent, et dans lequel sont réalisés, dans les interstices entre les dents (53, 53'), des ajours (59, 59'), qui vont depuis le fond de l'interstice entre les dents jusqu'à la cavité intérieure (21),
**caractérisé en ce que** les ajours (59, 59') sont orientés dans une direction radiale dans les interstices entre les dents (53, 53'), et la dimension des ajours (59, 59') dans les interstices entre les dents (53, 53') présente, par rapport à la largeur des interstices entre les dents (53, 53'), un rapport situé dans la plage comprise entre 0,5 et 0,9.

2. Corps de presse selon la revendication 1,
**caractérisé en ce que** chaque dent (55, 55') présente une tête de dent comprenant une face de tête s'étendant à angle droit par rapport aux flancs de dent, dans lequel la largeur de la face de tête correspond à peu près à la largeur de dent.

3. Dispositif de pelletisation d'un matériau en vrac, en particulier de matériaux biologiques, comprenant au moins deux corps de presse (9) s'engageant l'un avec l'autre, présentant une forme de pot selon la revendication 1 ou 2, dans lequel au moins une arrivée de matériau (5) pour le matériau en vrac à introduire entre les corps de presse et une sortie de matériau (17) pour le matériau compressé en des corps sont associées aux corps de presse (9), et comprenant un système d'acheminement (61) guidant le matériau en vrac directement sur la zone de matrice des corps de presse (9).

4. Procédé servant à fabriquer un corps de presse selon la revendication 1 ou 2 pour un dispositif de pelletisation de matériau en vrac, de préférence servant à fabriquer une matrice de pot, comprenant les étapes de procédé consistant à :
- fournir une ébauche de matrice en forme de pot comprenant une cavité intérieure ;
- produire une denture extérieure (51) comprenant des ajours allant jusqu'à la cavité intérieure au niveau de la périphérie de l'ébauche de matériau, ladite étape étant constituée des étapes consistant à :
produire des rainures s'étendant de préférence de manière parallèle par rapport à l'axe central de l'ébauche de matrice au niveau de la face périphérique (49) extérieure, dans lequel la largeur de rainure correspond à la largeur d'interstice entre les dents de la denture extérieure (51), et
pratiquer des ajours (59, 59') s'étendant depuis le fond de rainure jusqu'à la cavité intérieure.

5. Procédé selon la revendication 4, **caractérisé en ce**
**que** l'ordre des étapes consistant à produire la denture extérieure est le suivant :
a) produire des rainures s'étendant de préférence de manière parallèle par rapport à l'axe central de l'ébauche de matrice au niveau de la face périphérique (49) extérieure, dans lequel la largeur de rainure correspond à la largeur d'interstice entre les dents de la denture extérieure (51), et
b) pratiquer immédiatement après des ajours (59, 59') s'étendant depuis le fond de rainure jusqu'à la cavité intérieure.

6. Procédé selon la revendication 4 ou 5,
**caractérisé en ce que** les rainures sont pratiquées dans une partie surélevée faisant saillie radialement vers l'extérieur au niveau de la face périphérique (49) de l'ébauche de matrice.

7. Procédé selon l'une quelconque des revendications précédentes 4 à 6,
**caractérisé en ce que** sont produites, de préférence sont fraisées, au niveau de la face périphérique (49) de l'ébauche de matrice, des rainures étagées respectivement des deux côtés, de manière préférée des rainures à trou oblong, lesquelles présentent une profondeur de rainure étagée radialement vers l'intérieur au niveau de la face périphérique (49).

8. Procédé selon l'une quelconque des revendications 4 à 7,
**caractérisé en ce que** les côtés frontaux des dents (55, 55'), s'étendant de manière parallèle par rapport aux rainures, de la denture extérieure (51) sont arrondis de telle manière qu'ils sont mis en place pour venir en prise avec les rainures, de préférence les rainures à trou oblong, d'un corps de presse pouvant être disposé de manière adjacente.

9. Procédé selon l'une quelconque des revendications 4 à 8,
**caractérisé en ce que** plusieurs ajours (59, 59') comprenant des axes longitudinaux s'étendant de manière radiale par rapport à l'axe central du corps de presse (9) sont pratiqués dans chaque fond de rainure.

10. Procédé selon l'une quelconque des revendications 4 à 9,
**caractérisé en ce qu'**une pluralité d'ajours est pratiquée, de préférence est percée, dans chaque fond de rainure, dont le diamètre est inférieur à la largeur des interstices entre les dents (53, 53') de la denture extérieure.

11. Procédé selon l'une quelconque des revendications 4 à 10,
**caractérisé en ce que** la fourniture de l'ébauche de matrice comprend la production de l'ébauche de matrice en forme de pot avec sa cavité intérieure à partir d'un demi-produit sensiblement cylindrique de préférence au moyen d'un tournage.

12. Procédé selon la revendication 11,
**caractérisé en ce que**, lors de la production de l'ébauche de matrice, des zones de la face périphérique de l'ébauche de matrice en forme de pot sont supprimées par enlèvement au tour, et une partie surélevée faisant saillie vers l'extérieur à distance des côtés frontaux de l'ébauche de matrice à produire est réalisée.
